# FASCICULE DE BREVET EUROPEEN

(11) **EP 2 169 208 B1**
(45) Date de publication et mention de la délivrance du brevet: **21.01.2015**
(21) Numéro de dépôt: 09170075.7
(22) Date de dépôt: 11.09.2009
(51) Int. Cl.: F02M 25/07, F02B 29/04

(54) **Module de mélange de deux gaz pour un échangeur de chaleur**
Baugruppe zur Vermischung von zwei Gasen für einen Wärmetauscher
Assembly for mixing two gases for a heat exchanger

(30) Priorité: 25.09.2008 FR 0805276
(43) Date de publication de la demande: 31.03.2010
(73) Titulaire: VALEO SYSTEMES THERMIQUES, 78320 Le Mesnil Saint-Denis (FR)
(72) Inventeur: Gessier, Bertrand, 78490 Montfort-L'Amaury (FR); Martins, Carlos, 78150 Le Chesnay (FR); Bernard, Jean-Sylvain, 78320 Le Mesnil-Saint-Denis (FR); Magnier-Catgenod, Anne-Sylvie, 92210 Saint-Cloud (FR)
(74) Mandataire: Metz, Gaëlle

(56) Documents cités:
- EP-A- 1 911 946
- DE-A1- 19 945 769
- DE-A1-102005 044 741
- US-A1- 2005 161 028
- US-A1- 2006 060 173

## Description

L'invention concerne le domaine des échangeurs de chaleur et plus particulièrement les échangeurs de chaleur utilisés dans le domaine automobile.

Un moteur thermique de véhicule automobile comporte une chambre de combustion, généralement formée par une pluralité de cylindres, dans laquelle un mélange de comburant et de carburant est brûlé pour générer le travail du moteur. Le comburant comporte de l'air, qui peut être comprimé ou non, selon que le moteur comporte un turbocompresseur ou non. Les gaz admis dans la chambre de combustion sont dénommés gaz d'admission.

Ces gaz d'admission doivent être refroidis avant d'être introduits dans la chambre de combustion, cette fonction est remplie par l'échangeur de chaleur.

De manière classique, un échangeur de chaleur comporte un faisceau d'échange de chaleur constitué par une multiplicité d'éléments d'échange empilés entre deux plaques d'extrémités (plaque de fond et plaque de dessus). Les espaces entre les éléments d'échange du faisceau forment des canaux de conduite d'un flux de gaz à refroidir, ici des gaz d'admission. Les éléments d'échange du faisceau sont creux et conduisent un fluide caloporteur, destiné à échanger des calories avec le flux de gaz à refroidir circulant dans les canaux de conduite de fluide. Chaque élément d'échange du faisceau est traditionnellement formé de deux plaques, appelées aussi coquilles. Des ailettes de perturbation sont traditionnellement disposées dans les canaux afin de ralentir la traversée du flux de gaz dans lesdits canaux et ainsi favoriser les échanges de chaleur (ou de calories) entre le flux de gaz et le fluide caloporteur.

Dans les échangeurs de ce type, les éléments d'échange se présentent classiquement sous la forme d'un pavé rectangulaire avec deux passages de communication, par exemple, circulaires, ménagés le long d'un petit côté de l'élément d'échange. Ces passages de communication permettent d'alimenter les éléments d'échange en fluide caloporteur sur toute la hauteur de l'échangeur, les passages permettant respectivement à l'introduction et l'évacuation du fluide caloporteur de l'échangeur.

Le flux de gaz est, quant à lui, introduit dans l'échangeur via un collecteur d'entrée débouchant sur le faisceau d'échange de chaleur. Après refroidissement, il est collecté en sortie dudit faisceau dans un collecteur de sortie.

Afin de réduire les émissions polluantes, il est connu d'introduire dans le moteur des gaz d'échappement recirculés. Ces derniers sont introduits via un ou plusieurs points d'introdudion ménagés dans une conduite de gaz s'étendant entre l'échangeur et le moteur, afin que les gaz recirculés se mélangent avec les gaz refroidis provenant de l'échangeur. De manière classique, le mélange n'est pas homogène entre les gaz recirculés et les gaz d'admission lorsqu'ils sont admis dans le moteur, ce qui dégrade les performances de la combustion.

On connaît des dispositifs d'introduction des gaz d'échappement recirculés des documents EP 1 911 946, US 2002/0158151 et US 2006/060173.

Afin de résoudre cet inconvénient, une solution consiste à augmenter le nombre de pointes d'introduction de gaz recirculés dans la conduite. Cependant, cela entraîne des modifications structurales importantes et l'utilisation de pièces supplémentaires (rail, etc.) entraînant une augmentation des coûts et de l'encombrement.

Une tendance actuelle vise à rapprocher au maximum l'échangeur de chaleur du moteur pour gagner en compacité, entraînant une diminution de la longueur de la conduite d'amenée des gaz et par conséquent une diminution du nombre de points d'introduction potentiels.

Par ailleurs, il est important de pouvoir mélanger les gaz recirculés et les gaz d'admission sans dépendre de la nature du faisceau d'échange de chaleur, la solution devant être applicable aussi bien pour un échangeur à plaques que pour un échangeur à tubes.

Afin d'éliminer ces inconvénients, la demanderesse propose un module de mélange de flux de deux gaz (G, H) pour un échangeur de chaleur de moteur thermique à combustion interne selon les caractéristiques de la revendication 1.

On désigne par strates, des couches de flux de gaz dans ledit module de mélange. Par analogie aux strates géologiques, lorsque l'on observe le module de mélange en coupe transversale, orthogonalement à la direction du premier flux de gaz, les strates de conduction et de diffusion du module de mélange forment des lignes rectilignes ou curvilignes.

Un tel module de mélange stratifié, avec au moins deux strates de diffusion; permet de mélanger les différents flux de gaz selon des couches distinctes, un tel mélange pouvant être qualifié de « surfacique » ou « planaire ».

De préférence, au moins deux deuxième strate de diffusion du deuxième flux de gaz (H) sont intercalées entre deux premières strates de conduction du premier flux de gaz (G).

De préférence, chaque deuxième strate de diffusion du deuxième flux de gaz (H) est disposée ou intercalée entre deux premières strates de conduction du premier flux de gaz (G).

Un module de mélange stratifié avec des strates alternées permet avantageusement de favoriser le mélange des différentes strates qui s'entremêlent.

Un module de mélange stratifié s'oppose à un module de mélange « linéaire » dans lequel un premier flux de gaz est mélangé à un deuxième flux de gaz selon une unique direction linéaire, au moyen, par exemple, d'une conduite de diffusion tel que décrit dans l'art antérieur. Autrement dit, dans un module de mélange selon l'art antérieur, les moyens de diffusion du deuxième flux de gaz sont alignés selon une droite (module de mélange linéaire) alors que dans la présente demande, les moyens de diffusion du deuxième flux de gaz sont répartis selon une surface (module de mélange planaire). Encore autrement dit, les moyens d'injection sont distribuées selon au moins deux direction s de manière à former au moins un plan,

Le module comprend :
- des moyens de division du premier flux de gaz (G) en une pluralité de flux élémentaires de premier gaz (g1, g2, ..., gn) ;
- des moyens d'introduction du deuxième flux de gaz (H) dans ledit module de mélange et
- des moyens de division du deuxième flux de gaz (H) hors du module de mélange en une pluralité de flux élémentaires de deuxième gaz (h1, h2, ..., hn), les flux élémentaires de premier gaz (g1, g2, ..., gn) se mélangeant avec les flux élémentaires de deuxième gaz (h1, h2, ..., hn).

Ainsi, les différents flux de gaz sont séparés en strates qui sont elles-mêmes divisées. En effet, le module de mélange permet avantageusement de diviser et de mélanger les deux flux de gaz selon des zones élémentaires de mélange qui sont spatialement réparties. Autrement dit, lesdits moyens de division sont agencés pour « multiplexer » les différents flux de gaz en un unique flux de gaz mélangés (HG).

Les moyens de division du premier flux de gaz (G) comprennent une pluralité de lames de séparation parallèles les unes avec les autres, les flux élémentaires de premier gaz (g1, g2, ..., gn) circulant entre les lames de séparation, les lames de séparation délimitent entre elles des strates de conduction du premier flux de gaz, chaque lame de séparation formant en tant que telle une strate de diffusion du deuxième flux de gaz.

Encore, lesdites lames de séparation sont creuses et reliées par une de leur extrémité aux moyens d'introduction du deuxième flux de gaz (H).

Le deuxième flux de gaz (H) est avantageusement divisé selon les lames de séparation, ces dernières divisant ainsi le premier flux de gaz (G) et le deuxième flux de gaz (H).

Selon une caractéristique particulière de l'invention, les moyens de division du deuxième flux de gaz (H) se présentent sous la forme d'ouvertures de diffusion ménagées dans lesdites lames de séparation. Les ouvertures de diffusion permettent de diffuser respectivement des flux élémentaire de deuxième gaz (H).

Ainsi, le deuxième flux de gaz (H) est premièrement divisé dans les lames de séparation, dans lesquelles il circule, et deuxièmement subdivisé en flux élémentaires en vue de son mélange avec le premier flux de gaz (G).

De préférence, les ouvertures de diffusion sont circulaires, oblongues ou rectangulaires.

De préférence encore, les ouvertures de diffusion sont ménagées dans une partie aval des lames de séparation. Le deuxième flux de gaz est avantageusement diffusé en aval du module de mélange, évitant ainsi que le deuxième flux de gaz (H) n'endommage l'échangeur pour lequel le module de mélange est destiné.

Selon une autre forme de réalisation particulière de l'invention, les ouvertures de diffusion sont traversantes et ménagées orthogonalement à la direction dans laquelle s'étendent les lames de séparation.

De préférence, la forme desdites ouvertures de diffusion traversantes est agencée pour favoriser une aspiration du deuxième flux de gaz hors des lames de séparation par effet Venturi.

De préférence encore, les ouvertures de diffusion sont de plus en plus grandes au fur et à mesure que l'on s'éloigne des moyens d'introduction du deuxième flux de gaz (H).

Le module de mélange comprend un cadre de support sensiblement rectangulaire dans lequel sont supportés :
- les lames de séparation et
- des séparateurs de maintien agencés pour maintenir les lames de séparation parallèles les unes aux autres, les séparateurs de maintien étant orthogonaux aux lames de séparation.

Les moyens d'introduction se présentent sous la forme d'une canalisation tubulaire formant un bord latéral du rectangle dont le cadre de support à la forme.

L'invention concerne également un échangeur de chaleur de moteur thermique à combustion interne comprenant :
- un faisceau d'échange de chaleur agencé pour échanger de la chaleur avec un premier flux de gaz (G) par circulation d'un fluide caloporteur (F) ;
- un collecteur de sortie agencé pour guider le premier flux de gaz (G) hors de l'échangeur de chaleur ;
- un module de mélange tel que présenté précédemment, agencé pour mélanger le premier flux de gaz (G) avec un deuxième flux de gaz (H), ledit module de mélange étant monté dans le collecteur de sortie en aval du faisceau d'échange de chaleur.

Le module de mélange est avantageusement associé à un échangeur de chaleur. L'encombrement de l'échangeur n'est avantageusement pas modifié. En outre, un tel module de mélange peut être adapté pour tout type de faisceau d'échange de chaleur, qu'il soit à plaques ou à tubes.

De préférence, le faisceau d'échange de chaleur est agencé pour échanger de la chaleur avec le premier flux de gaz (G) selon une surface transversale d'échange, le module de mélange est agencé pour mélanger le premier flux de gaz (G) et le deuxième flux de gaz (H) selon une surface transversale de mélange, les dimensions de la surface d'échange du faisceau d'échange de chaleur étant égales aux dimensions de la surface transversale de mélange du module de mélange, respectivement. Cela permet avantageusement d'obtenir un échangeur compact, le module de mélange tirant pleinement partie des dimensions de la surface d'échange pour mélanger de manière spatiale les premier et deuxième flux de gaz.

Lorsque les nombres de strates de diffusion et de conduction sont sensiblement identiques, le module de mélange permet de mélanger les deux gaz sur toute sa surface, améliorant ainsi l'homogénéisation du mélange.

De préférence encore, le faisceau d'échange de chaleur est formé d'éléments d'échange dans lesquels circule le fluide caloporteur (F), les lames de séparation du module de mélange étant alignées axialement avec les éléments d'échange du faisceau d'échange. Les pertes de charge au cours de la circulation du premier flux de gaz dans l'échangeur de chaleur sont alors avantageusement diminuées.

De préférence toujours, le faisceau d'échange de chaleur est formé d'éléments d'échange dans lesquels circule le fluide caloporteur (F), les lames de séparation du module de mélange étant en quinconces avec les éléments d'échange du faisceau d'échange. Le premier flux de gaz est préalablement divisé dans le faisceau d'échange avant d'être de nouveau subdivisé dans le module de mélange.

L'invention concerne également un faisceau d'échange d'un échangeur de chaleur de moteur thermique à combustion interne, le faisceau d'échange de chaleur étant agencé pour échanger de la chaleur avec le premier flux de gaz (G) par circulation d'un fluide caloporteur (F), faisceau dans lequel est intégré un module de mélange tel que présenté précédemment, le faisceau d'échange de chaleur comprenant une pluralité d'éléments d'échange de chaleur dont au moins un élément d'échange de chaleur comporte :
- un canal de circulation du fluide caloporteur ;
- des moyens d'introduction du deuxième flux de gaz dans ledit élément d'échange de chaleur,
- des moyens de répartition et de diffusion du deuxième flux de gaz (H) hors dudit élément, le deuxième flux de gaz se mélangeant au premier flux de gaz, et
- un canal de transport du deuxième flux de gaz (H) reliant lesdits moyens d'introduction auxdits moyens de répartition et de diffusion.

De manière avantageuse, le module de mélange est intégré à un faisceau d'échange de chaleur de manière à diminuer son encombrement.

Le mélange des gaz est réalisé de manière discrète pour un élément d'échange de chaleur de l'échangeur. Le flux de gaz à diffuser est réparti et diffusé par les moyens de répartition et de diffusion ce qui permet de former des zones de mélanges locales et isolées qui favorisent l'homogénéisation du mélange.

De préférence, le deuxième flux de gaz se mélange au premier flux de gaz sur une pluralité de zones élémentaires de mélange, discrètes et spatialement réparties.

Selon une forme préférée de l'invention, le premier flux de gaz est un flux de gaz chaud à refroidir par l'échangeur de chaleur.

De préférence, les canaux de circulation du fluide caloporteur et de transport du deuxième flux de gaz sont formés dans ledit élément d'échange de chaleur.

De préférence, l'élément d'échange de chaleur est formé de deux plaques en vis-à-vis.

De préférence encore, les plaques sont embouties pour former les canaux de circulation du fluide caloporteur et de transport du deuxième flux de gaz.

De préférence, les canaux de circulation du fluide caloporteur et de transport du deuxième flux de gaz sont séparés par des moyens de rupture de conduction thermique.

Cela est particulièrement avantageux lorsque le premier flux de gaz est un flux de gaz à refroidir. Le canal de circulation du fluide caloporteur (fluide basse température) est isolé thermiquement du canal de distribution du deuxième flux de gaz à diffuser (fluide haute température), évitant ainsi de refroidir le deuxième flux de gaz et limitant la formation de condensats pouvant endommager le canal de distribution du deuxième flux de gaz à diffuser.

De préférence encore, lesdits moyens de rupture de conduction thermique se présentent sous la forme de fentes de rupture thermique formées dans l'élément d'échange de chaleur entre le canal de circulation du fluide caloporteur et le canal de transport du deuxième flux de gaz.

De préférence toujours, lesdits moyens de répartition et de diffusion du deuxième flux de gaz hors de l'élément d'échange de chaleur se présentent sous la forme d'ouvertures de diffusion ménagées dans le canal de distribution du deuxième flux de gaz à diffuser.

Les ouvertures de diffusion permettent de former des zones élémentaires de mélange, discrètes et spatialement réparties. Au niveau de chaque ouverture de diffusion, le deuxième flux de gaz à diffuser se mélange localement au flux de gaz à refroidir, de manière isolée et indépendante des autres ouvertures. Ainsi et de manière globale, les deux gaz se mélangent de manière homogène.

Le premier flux de gaz circule de l'amont vers l'aval dans l'échangeur de chaleur pour lequel l'élément d'échange de chaleur est destiné. Les ouvertures de diffusion sont agencées pour diffuser le deuxième flux de gaz en aval dudit élément d'échange de chaleur.

De manière avantageuse, le deuxième flux de gaz ne circule pas dans l'échangeur de chaleur, évitant ainsi que le deuxième flux de gaz ne soit refroidi par le fluide caloporteur. La condensation des gaz du deuxième flux de gaz est limitée, évitant ainsi un endommagement de l'échangeur de chaleur par les condensats.

De préférence, lesdites ouvertures de diffusion sont orientées de manière à ce que des gaz condensés, issus de la condensation de gaz du deuxième flux de gaz à diffuser, soient guidés hors de la conduite de distribution sous l'effet de la gravité.

Si des condensats venaient à se former dans le canal de distribution du deuxième flux de gaz, ils seraient immédiatement évacués du canal par les ouvertures de diffusion orientées vers le bas, la pesanteur entraînant les condensats vers le bas de l'échangeur hors des éléments d'échange. Les éléments d'échange, ici des éléments de refroidissement, sont avantageusement protégés contre les effets nocifs des condensats tels que la corrosion.

De préférence encore, les ouvertures de diffusion sont ménagées dans l'épaisseur de l'élément d'échange de chaleur, à travers ledit canal de transport du deuxième flux de gaz.

Les ouvertures de diffusion traversantes permettent avantageusement de diffuser le gaz par les faces inférieure et supérieure de l'élément d'échange de chaleur, la circulation du flux de gaz à refroidir sur ses faces inférieure et supérieure permettant également de favoriser l'aspiration des gaz du canal de distribution hors de l'élément d'échange par aspiration Venturi. Autrement dit, les ouvertures traversantes permettent de créer un effet de succion des gaz du deuxième flux de gaz du canal de distribution, lesdits gaz étant entraînés par le premier flux de gaz divisé selon deux nappes de gaz parallèles circulant respectivement au-dessus et en dessous des ouvertures de diffusion traversantes.

De préférence toujours, la forme desdites ouvertures de diffusion traversantes est agencée pour favoriser une aspiration du deuxième flux de gaz hors de la conduite de distribution par effet Venturi.

De préférence toujours, les ouvertures de diffusion sont de plus en plus grandes au fur et à mesure que l'on s'éloigne des moyens d'introduction du deuxième flux de gaz en suivant le canal de distribution dans l'élément d'échange de chaleur.

Les moyens d'introduction et d'évacuation du fluide caloporteur et les moyens d'introduction du deuxième flux de gaz à diffuser sont ménagés à une seule et même extrémité de l'élément d'échange de chaleur, permettant ainsi de faciliter la connexion des circuits de fluide et de flux de gaz à l'échangeur de chaleur tout en conservant un encombrement minimum.

L'invention concerne également un échangeur de chaleur à plaques comprenant au moins un faisceau d'échange de chaleur tel que présenté.

L'invention sera mieux comprise à l'aide du dessin annexé sur lequel :
- la figure 1 représente une vue en perspective d'un échangeur de chaleur à plaques;
- la figure 2 représente une vue en perspective d'un module de mélange de deux gaz selon l'invention ;
- la figure 3 représente une vue en perspective du module de la figure 2 monté à la sortie du faisceau d'échange de chaleur de l'échangeur de chaleur de la figure 1 ;
- la figure 4 représente une vue en perspective arrière de l'échangeur de chaleur de la figure 3 sur lequel est monté un collecteur de sortie :

- la figure 5 représente une vue en perspective avant de l'échangeur de chaleur de la figure 4;
- la figure 6 représente une vue schématique d'une première forme de réalisation des ouvertures de diffusion d'un module de mélange selon l'invention ;
- la figure 7 représente une vue schématique d'une deuxième forme de réalisation des ouvertures de diffusion d'un module de mélange selon l'invention ;
- la figure 8 représente une vue schématique d'une troisième forme de réalisation des ouvertures de diffusion d'un module de mélange selon l'invention ;
- la figure 9 représente une vue en perspective d'un échangeur de chaleur à plaques avec un module de mélange intégré ;
- la figure 10 représente une vue de côté de l'échangeur de la figure 9 ;
- la figure 11 représente une vue en perspective d'une première forme de réalisation d'un élément d'échange de chaleur d'un échangeur de chaleur à plaques avec un module de mélange intégré ;
- la figure 12 représente une vue en éclaté d'une deuxième forme de réalisation d'un élément d'échange de chaleur d'un échangeur de chaleur à plaques avec un module de mélange intégré ;
- la figure 13 représente une vue en perspective d'une troisième forme de réalisation d'un élément d'échange de chaleur d'un échangeur de chaleur à plaques avec un module de mélange intégré ;
- la figure 14 représente une vue en perspective d'une quatrième forme de réalisation d'un élément d'échange de chaleur d'un échangeur de chaleur à plaques avec un module de mélange intégré ;
- la figure 15 représente une vue de dessus de l'échangeur de la figure 9 ; et
- la figure 16 représente une vue en coupe selon la ligne A-A de l'échangeur de la figure 15, l'échangeur de chaleur étant vu par derrière.

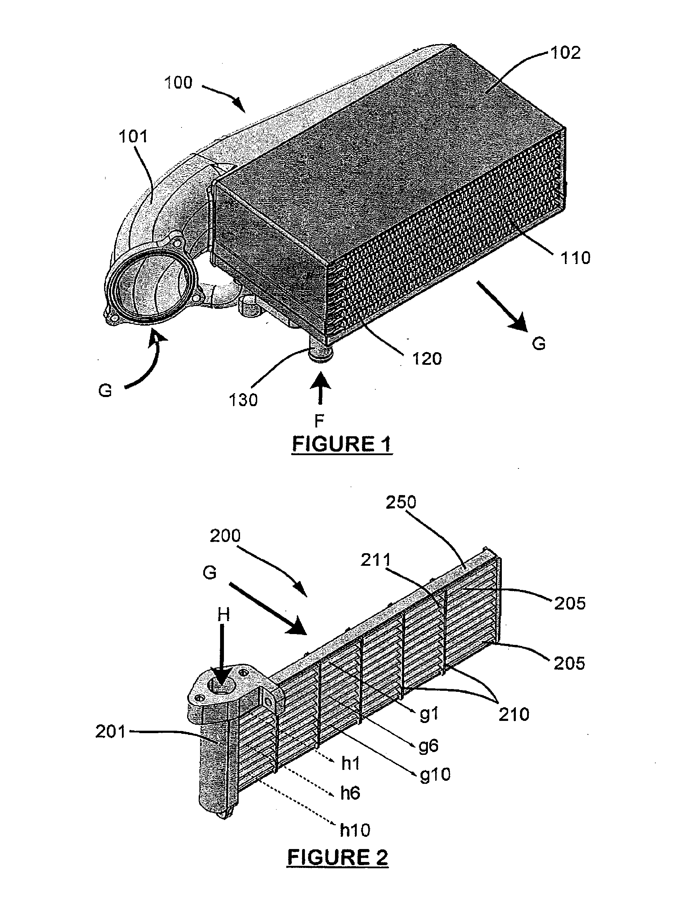

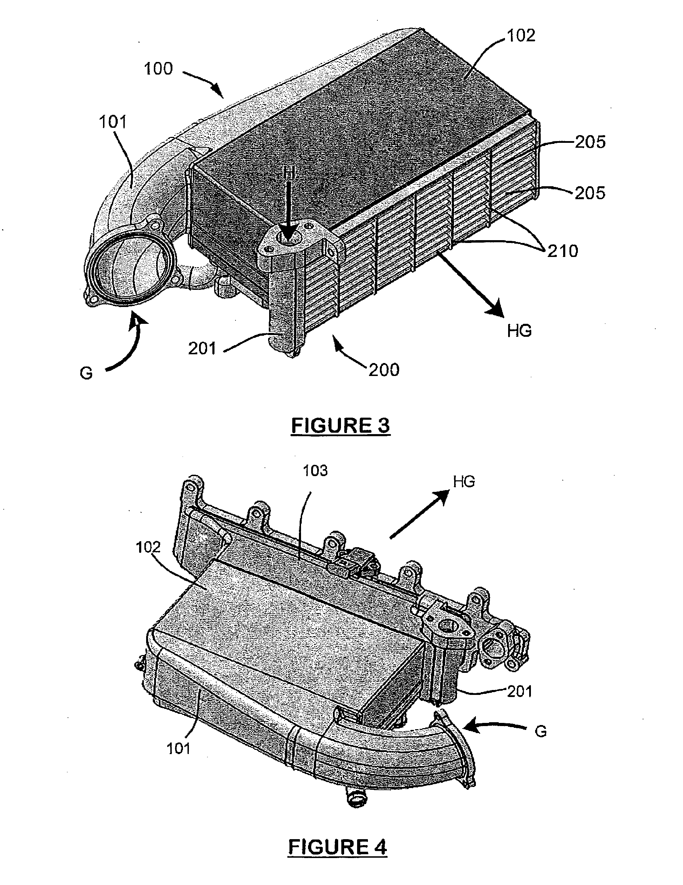

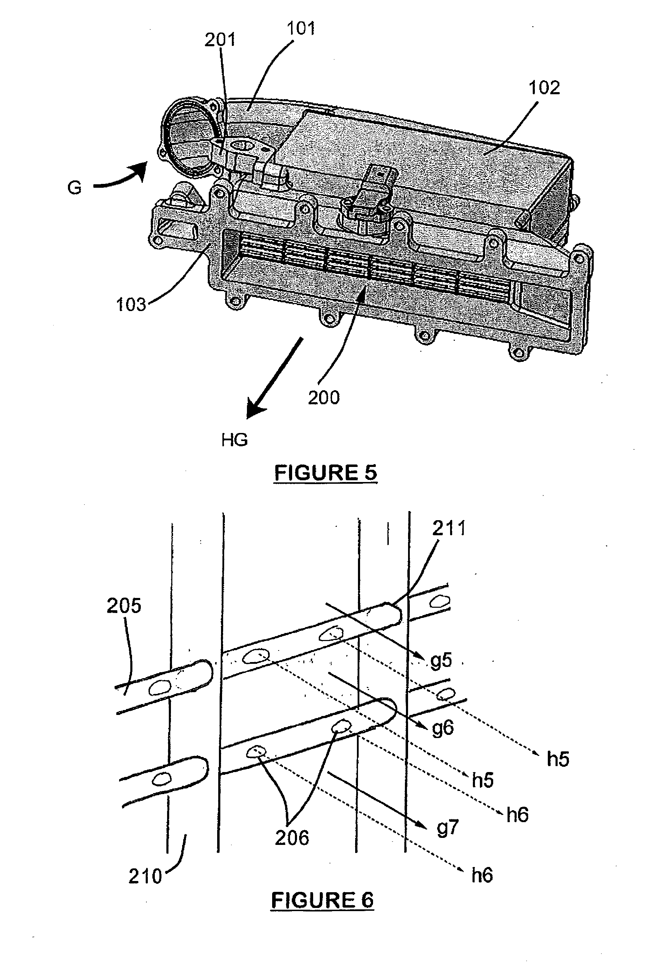

En référence à la figure 1, un échangeur de chaleur 100 comporte un faisceau d'échange de chaleur 102 agencé pour échanger de la chaleur avec un premier flux de gaz (G), ici des gaz d'admission, circulant d'amont en aval dans le faisceau d'échange de chaleur 102. Les gaz d'admission (G) sont introduits dans le faisceau d'échange de chaleur 102 par un collecteur d'entrée 101, monté en amont du faisceau d'échange de chaleur 102, et évacués par un collecteur de sortie 103 (représenté sur les figures 4 et 5), monté en aval du faisceau d'échange de chaleur 102.

Le faisceau d'échange de chaleur 102 est constitué par une multiplicité d'éléments d'échange 110 empilés et assemblées entre deux plaques d'extrémités (plaque de fond et plaque de dessus). Les espaces entres les éléments d'échange du faisceau 110 forment des canaux de conduite des gaz d'admission (G). Les éléments d'échange 110 du faisceau 102 sont creux et conduisent un fluide caloporteur (F), afin d'échanger des calories avec les gaz d'admission (G) circulant dans les canaux de conduite de fluide. Des ailettes de perturbation 120 sont disposées dans les canaux afin de ralentir la traversée du flux de gaz dans lesdits canaux et ainsi favoriser les échanges de chaleur (ou de calories) entre le flux de gaz (G) et le fluide caloporteur (F). Le faisceau d'échange de chaleur 102 est maintenu dans un boîtier parallélépipédique dans lequel sont insérés les éléments d'échange avec leurs intercalaires associés. La section par un plan transversal du boîtier du faisceau d'échange de chaleur définit la surface transversale de refroidissement du faisceau d'échange de chaleur 102, plus généralement désignée surface d'échange. Le fluide caloporteur (F) est introduit dans le faisceau d'échange de chaleur 102 par une tubulure d'entrée 130 ménagée sur la paroi inférieure du boîtier, chaque élément d'échange 110 étant relié de manière fluidique à la dite tubulure d'entrée 130.

Le faisceau d'échange de chaleur 102 possède une surface transversale de refroidissement sensiblement rectangulaire. Ainsi, à la sortie du faisceau d'échange de chaleur 102, le flux de gaz d'admission refroidi (G) est de section rectangulaire.

### Première forme de réalisation : Module de mélange indépendant du faisceau d'échange de chaleur « standalone »

On place à la sortie du faisceau d'échange de chaleur 102 un module de mélange 200 dont la fonction est de mélanger les gaz d'admission (G), refroidis par le faisceau d'échange de chaleur 102, avec d'autres gaz, en particulier, des gaz d'échappement recirculés (H), plus connus sous leur abréviation anglaise « EGR » correspondant à « Exhaust Gas Recirculated ». Le module de mélange est dit indépendant, ou « standalone », car il n'est pas lié structurellement au faisceau d'échange de chaleur 102. Un module de mélange intégré structurellement au faisceau d'échange de chaleur 102 sera détaillé par la suite (deuxième forme de réalisation).

En référence à la figure 2, le module de mélange 200 comprend un cadre de support rectangulaire 250, ici en métal, comportant quatre côtés : un côté supérieur, un côté inférieur, un côté gauche et un côté droit. Dans la suite de la description, les termes supérieur, inférieur, droite et gauche sont choisis par convention comme les positions supérieur, inférieur, droit et gauche sur la figure 2, ce qui ne préjuge pas de l'orientation du module de mélange 200 dans l'échangeur de chaleur 100.

Dans cet exemple, les dimensions de la surface rectangulaire transversale de refroidissement du faisceau d'échange de chaleur 102 sont sensiblement égales aux dimensions de la surface rectangulaire transversale de mélange du module de mélange 200, respectivement. Les dimensions de la surface rectangulaire transversale de mélange du module de mélange 200 correspondant respectivement à celles du cadre de support 250.

Les côtés supérieur et inférieur du cadre de support 250 forment les longueurs du rectangle dont le cadre de support 250 a la forme, les côtés droit et gauche du cadre de support 250 formant les largeurs. Le module de mélange 200 comprend, en outre, des lames de séparation 205 agencées pour diviser un flux d'air amont en une pluralité de flux élémentaires aval. Les lames de séparation 205 sont dans cet exemple en métal. La fonction des lames de séparation 205 sera précisée par la suite dans l'exemple de mis en oeuvre de l'invention.

Les lames de séparation 205 se présentent, dans cet exemple, sous la forme de tubes aplatis s'étendant selon la longueur du cadre de support, les lames de séparation 205 étant parallèles les unes avec les autres et fixées au cadre de support 250. Les lames de séparation 205 sont maintenues dans le cadre 250 par une pluralité de séparateurs de maintien 210 s'étendant orthogonalement auxdites lames de séparation 205, les séparateurs 210 étant également fixés au cadre de support 250. Les séparateurs de maintien 210 s'étendent selon la largeur du cadre de support 250.

Dans cet exemple, un séparateur 210 se présente sous la forme d'une plaque métallique dans laquelle sont ménagées des ouvertures traversantes de support 211, lesdites ouvertures de support 211 étant disposées à égale distance les unes des autres. Chaque lame de séparation 205 est supportée dans sa longueur par la pluralité de séparateurs 210, chaque lame de séparation 205 traversant successivement une ouverture traversante 211 de chaque séparateur 210. Comme les ouvertures traversantes 211 des séparateurs 210 sont à égales distances les unes des autres, les lames de séparation 205, une fois insérées dans lesdites ouvertures 211, sont parallèles les unes avec les autres. Autrement dit, les lames de séparation 205 forment avec les séparateurs 210 une grille dont les carreaux sont rectangulaires comme on peut le voir sur les figures 6 à 8.

Les séparateurs 210 et les lames de séparation 205 sont fixés de manière solidaire avec le cadre de support 250. Dans cet exemple, les extrémités supérieures et inférieures des séparateurs 210 sont respectivement brasées aux cotés supérieur et inférieur du cadre de support 250. Il va de soi que d'autres modes de fixation pourraient également convenir, en particulier, aux moyens d'encoches ou de crochets.

Les tubes, dont les lames de séparation 205 ont la forme, sont creux et possèdent une extrémité ouverte et une extrémité fermée. Dans le cas présent, les extrémités fermée et ouverte des lames de séparation 205 correspondent respectivement aux extrémités gauche et droite des lames de séparation 205 représentées sur la figure 2.

L'extrémité fermée de chacune des lames de séparation 205 est ici brasée sur le côté droit du cadre de support 250. Il va de soi que d'autres modes de fixation pourraient également convenir. L'extrémité droite fermée des lames de séparation 205 pourrait, par exemple, être insérée dans un trou borgne formé dans le côté droit du cadre de support 250.

L'extrémité ouverte gauche de chaque lame de séparation 205 est ici en communication fluidique avec une tubulure d'introduction de gaz 201 formant le côté gauche du cadre de support 250 du module de mélange 200. Autrement dit, la tubulure d'introduction de gaz 201 s'étend selon la largeur du cadre de support 250 et est orthogonale aux lames de séparation 205. La tubulure d'introduction 201 possède une forme sensiblement tubulaire et comprend un orifice d'introduction de gaz, ménagé à son extrémité supérieure, et des orifices de communication, ménagés à travers sa paroi transversale, dans lesquels sont insérées les extrémités ouvertes des lames de séparation 205, la tubulure d'introduction 201 étant fermée à son extrémité inférieure. Les extrémités ouvertes des lames de séparation 205 sont reliées à la dite tubulure 201 par brasage au niveau desdites ouvertures de communication. Les ouvertures de communication sont ici alignées les unes avec les autres le long d'une ligne s'étendant selon la largeur du cadre de support 250 du module de mélange 200.

Lorsqu'un flux de gaz principal est introduit par l'orifice d'introduction ménagé à l'extrémité supérieure de la tubulure d'introduction de gaz 201, le flux de gaz introduit circule de l'extrémité supérieure de la tubulure d'introduction 201 vers son extrémité inférieure. Le flux de gaz principal est divisé selon une pluralité de flux élémentaires correspondant aux lames de séparation 205. Autrement dit, le flux de gaz principal se divise en une pluralité de flux élémentaires dans chacune des lames de séparation 205. Autrement dit encore, chaque flux élémentaire se déplace dans une lame de séparation 205, depuis son extrémité gauche, reliée à la tubulure d'introduction de gaz 201, vers son extrémité droite, fixée au côté droit du cadre de support 250. Le module de mélange 200 comprend en outre des moyens pour diviser les flux élémentaires de gaz circulant dans les lames de séparation 205.

Ces moyens de division ou de diffusion se présentent sous la forme d'ouvertures de diffusion de gaz 206 réparties sur sa longueur de chacune des lames de séparation 205. Ces ouvertures de diffusion de gaz 206 sont agencées pour diviser un flux élémentaire en une pluralité de flux élémentaires discrets. Ici, les moyens diffusion de gaz 206 sont distribués selon au moins deux directions de manière à former au moins un plan pour la diffusion des gaz d'échappement recirculés. Dans ce mode de réalisation, les moyens diffusion de gaz 206 sont réalisés sous la forme d'ouvertures ou fentes d'injection.

### - Ouvertures de diffusion 206

En référence à la figure 6, selon une première forme de réalisation des ouvertures de diffusion, chaque lame de séparation 205 comporte des ouvertures de diffusion 206 de forme oblongue ménagées sur la partie aval de la lame de séparation 205. Dans cet exemple, les ouvertures de diffusion 206 possèdent les mêmes dimensions et sont alignées les unes avec les autres selon la longueur de la lame de séparation 205. Il va de soi que les ouvertures de diffusion 206 pourraient être de formes diverses. En particulier, des ouvertures de diffusion rectangulaires ou circulaires pourraient également convenir.

Le module de mélange 200 comprend également des joints extérieurs d'étanchéité, non représentés, montés sur les côtés droit et gauche du cadre de support 250 du module de mélange 200. Les joints sont ici en élastomère et collés au cadre de support 250.

Le montage du module de mélange 200 dans un échangeur de chaleur 100 va être maintenant plus particulièrement décrit.

Lors de l'assemblage de l'échangeur de chaleur 100, le module de mélange 200 est disposé en aval du faisceau d'échange de chaleur 102, de manière à ce que la surface transversale de refroidissement (surface d'échange) du faisceau d'échange de chaleur 102 communique directement avec la surface transversale de mélange du module de mélange 200 (surface de mélange). Le module de mélange 200 est ici emboîté dans le collecteur de sortie 103. Autrement dit, le collecteur de sortie 103 est monté extérieurement audit module de mélange 200, les joints d'étanchéité extérieurs limitant le risque de fuite entre le module de mélange 200 et le collecteur de sortie 103.

Le collecteur de sortie 103 se présente sensiblement sous la forme d'un parallélépipède, s'étendant axialement selon la direction des gaz à refroidir (G), qui est ouvert par ses deux faces transversales, En référence aux figures 3 et 4, le collecteur de sortie 103 est ici évasé vers l'aval pour être fixé au moteur.

Le collecteur de sortie 103 possède ici une forme aménagée pour pouvoir recevoir le module de mélange 200. Une encoche est ménagée dans sa paroi latérale gauche pour permettre le passage de la tubulure d'introduction de gaz 201 du module de mélange 200.

Des joints d'étanchéité sont disposés entre l'encoche du collecteur de sortie 103 et la tubulure d'introduction 201 du module de mélange 200 afin de limiter le risque de fuites.

Ainsi, une fois assemblé, un échangeur de chaleur dans lequel est intégré un module de mélange 200 possède les mêmes dimensions qu'un échangeur classique sans module de mélange.

Dans l'exemple précédent, le nombre de strates de diffusion est sensiblement égal au nombre de strates de conduction, la surface de mélange étant donc sensiblement égale à celle d'échange, Il va de soi que le nombre de strates de diffusion pourrait être inférieur au nombre de strates de conduction. De même, les dimensions de la surface de mélange du faisceau d'échange de chaleur pourraient être inférieures à celles de la surface d'échange.

Le fonctionnement du module de mélange 200 va maintenant être explicité à l'aide d'un exemple de mise en oeuvre de l'invention.

A titre d'exemple, au cours du fonctionnement de l'échangeur à plaques 100, un flux de gaz d'admission (G), destiné à être consommé dans un moteur thermique à combustion, circule axialement, d'amont en aval dans le faisceau d'échange de chaleur 102 dans des canaux de conduite d'un flux de gaz à refroidir formés entre les éléments d'échange 110 de l'échangeur de chaleur 100. A la sortie du faisceau d'échange de chaleur 102, le module de mélange 200 disposé directement en aval du faisceau d'échange de chaleur 102 est traversé d'amont en aval par un flux de gaz d'admission (G), désigné par la suite, flux principal de gaz d'admission (G). Le flux principal de gaz d'admission (G), refroidi par l'échangeur de chaleur 100, est divisé en une pluralité de flux élémentaires de gaz d'admission (g1, g2, ...., gn) par les lames de séparation 205 du module de mélange 200 comme représenté sur la figure 6.

Lors de la traversée des gaz d'admission (G), les lames de séparation 205, en raison de leur forme et orientation, divisent le flux amont de gaz d'admission (G) en une pluralité de flux élémentaires parallèles, chaque flux élémentaire circulant entre deux lames de séparation 205 consécutives. Un flux élémentaire de gaz (G) se forme également entre un côté longitudinal du cadre de support 250 et la lame de séparation 205 la plus proche dudit côté longitudinal. Le module de mélange 200 comporte ainsi une pluralité de strates de conduction du premier flux de gaz. Les séparateurs 210, orthogonaux auxdites lames de séparation 205, remplissent une fonction de subdivision des flux élémentaires, chaque flux élémentaire de gaz d'admission étant alors subdivisé en une pluralité de flux élémentaires discrets d'admission. Afin de favoriser la division et la subdivision des gaz d'admission (G), les lames de séparation 205 et les séparateurs 210 sont avantageusement effilés vers l'amont.

Autrement dit, les lames de séparation 205 et les séparateurs du module de mélange 200 se présentent comme une « grille de division » dont la fonction est de diviser un flux principal de gaz d'admission amont (G) en une pluralité de flux élémentaires discrets aval.

Dans cet exemple, le module de mélange 200 reçoit, via sa tubulure d'introduction 201, un flux de gaz recirculés ou gaz EGR (H), désigné par la suite flux principal de gaz EGR (H). Il va de soi que d'autres gaz pourraient également être introduits dans le module de mélange 200.

Le flux de gaz recirculés (H) circule dans les différentes lames de séparation 205 du module de mélange 200. Autrement dit, le flux de gaz recirculés (H) est divisé en une pluralité de flux élémentaires de gaz recirculés (h1, h2, ..., hn). Chaque flux élémentaire de gaz recirculés se déplace dans une lame de séparation 205, de son extrémité reliée à la tubulure d'introduction 201, i.e. extrémité gauche de la lame de séparation 205, vers son extrémité opposée fixée dans le cadre de support 250, i.e. extrémité droite de la lame de séparation 205. Le module de mélange 200 comporte ainsi une pluralité de strates de diffusion du deuxième flux de gaz.

Les gaz recirculés EGR (H) sont diffusés hors du module de mélange 200 par les ouvertures de diffusion 206 ménagées dans la partie aval des lames de séparation 205. Les ouvertures de diffusion 206 sont spatialement réparties le long des lames de séparation 205 afin de diviser le flux élémentaire de gaz EGR (H) circulant dans chacune des lames de séparation 205 en une pluralité de flux élémentaires discrets de gaz recirculés EGR (H).

Autrement dit, les lames de séparation 205 et les ouvertures de diffusion 206 du module de mélange 200 se présentent comme une « grille d'injection » comprenant une pluralité de points d'injection de gaz EGR spatialement répartis dans le flux de gaz d'admission (G). En référence à la figure 6, chaque strate de diffusion du deuxième flux de gaz (H) est disposée entre deux strates de conduction du premier flux de gaz (G). Autrement dit, la grille d'injection s'étend selon un plan et les points d'injection sont distribuées selon au moins deux directions dans ledit plan,

En référence à la figure 6, des zones de mélange discrètes se forment lors de la rencontre d'un flux élémentaire discret de gaz d'admission avec un flux élémentaire discret de gaz recirculés pour former des mélanges élémentaires discrets. Les zones de mélange discrètes sont spatialement réparties selon la surface transversale de mélange du module de mélange 200, permettant ainsi de favoriser l'homogénéisation du mélange des gaz d'admission (G) avec les gaz recirculés (H).

En amont du module de mélange 200, dans le collecteur de sortie 103 de l'échangeur de chaleur 100, les mélanges discrets se regroupent pour former un flux principal de gaz mélangés (HG), ce mélange (HG) étant homogène et propre à être consommé dans le moteur. Les flux élémentaires sont avantageusement multiplexés ce qui facilite leur homogénéisation lors de leur circulation dans le collecteur de sortie 103 depuis le module de mélange 200 vers le moteur. Les performances du moteur ne sont alors pas dégradées.

Les ouvertures de diffusion 206 des lames de séparation 205 sont agencées pour diffuser les gaz introduits dans le module de mélange 200 en aval dudit module 200, évitant ainsi que les gaz introduits ne circulent dans le faisceau d'échange de chaleur 102 et ne soient refroidis avec les gaz d'admission à refroidir (G). Les gaz EGR (H) sont des gaz contenant de nombreuses substances pouvant encrasser l'échangeur de chaleur 100.

Lors de la circulation des gaz EGR (H) dans les lames de séparation 205, ceux-ci peuvent être amenés à se condenser. Les condensats sont corrosifs et entraînent une diminution de la durée de vie de l'échangeur de chaleur 100 en cas d'accumulation dans le faisceau d'échange de chaleur 100. Ainsi, un échappement en aval permet d'éviter tout endommagement de l'échangeur de chaleur 10.

Pour éliminer cet inconvénient, dans une forme de réalisation non représentée, les ouvertures de distribution 206 des lames de séparation 205 sont sensiblement inclinées vers le bas de manière à ce que les condensats soient entraînés hors des lames de séparation 205 sous l'effet de la pesanteur, protégeant ainsi l'échangeur de chaleur 100 contre une corrosion par les condensats.

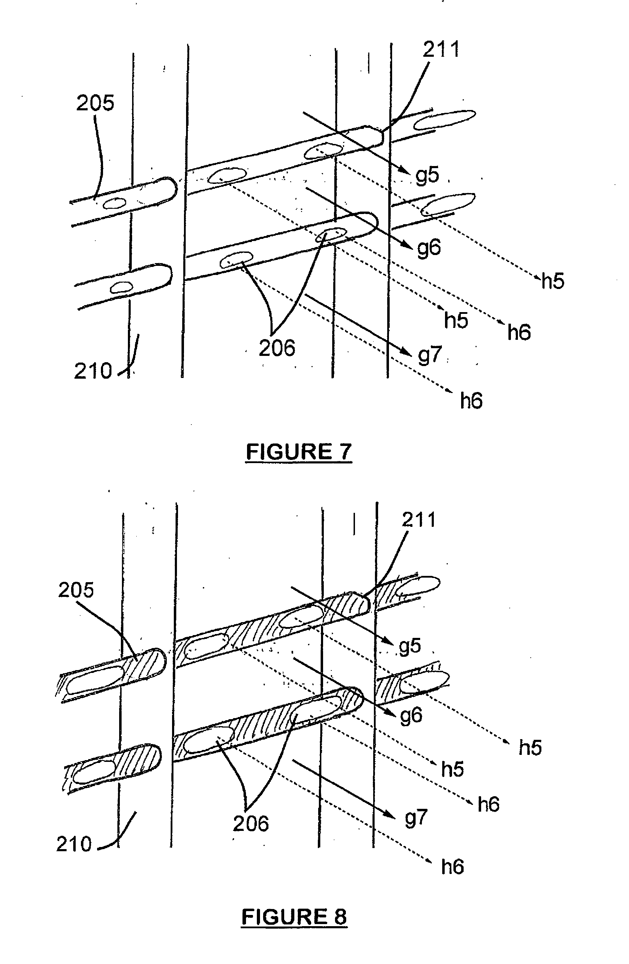

Les formes de réalisation suivantes des ouvertures de distribution 206 sont très similaires à la forme de réalisation précédente et c'est pourquoi les références utilisées pour les éléments des modules des figures 7 et 8 de structure ou fonction identique, équivalente ou similaire à celles des éléments du module des figures 2 et 6 sont les mêmes, pour simplifier la description. D'ailleurs, l'ensemble de la description du module de la figure 2 n'est pas reprise, cette description s'appliquant aux dispositifs des figures 7 et 8 lorsqu'il n'y a pas d'incompatibilités.

En référence à la figure 7 représentant un module de mélange 200 selon une deuxième forme de réalisation des ouvertures de diffusion, les ouvertures de diffusion 206 sont de plus en plus grandes au fur et à mesure que l'on s'éloigne de la tubulure d'introduction des gaz 201. Autrement dit, la section de passage des ouvertures de diffusion 206 est croissante au fur et à mesure que l'on s'éloigne de la tubulure d'introduction des gaz 201. Une lame de séparation 205 d'un module de mélange 200, comportant des ouvertures de diffusion 206 de dimensions différentes, présente de nombreux avantages qui vont être maintenant décrits.

Au cours du fonctionnement du moteur à combustion thermique, des explosions surviennent dans les cylindres du moteur et génèrent des ondes acoustiques se propageant dans le moteur et, en particulier, de l'aval vers l'amont dans la ligne d'admission des gaz.

Les ondes acoustiques dans la ligne d'admission des gaz entraînent des variations de la pression des gaz circulant dans l'échangeur de chaleur 100. En fonctionnement normal, la pression des gaz EGR (H) circulant à l'intérieur des lames de séparation 205 du module de mélange 200 est supérieure à la pression des gaz à refroidir (G) circulant à l'extérieur des lames de séparation 205, les gaz EGR (H) en surpression étant alors diffusés hors des lames de séparation 205 par les ouvertures de diffusion 206. Du fait des ondes acoustiques et des variations de pression qu'elles entraînent, la pression des gaz EGR (H) circulant à l'intérieur des lames de séparation 205 du module de mélange 200 est parfois inférieure à la pression des gaz à refroidir (G) circulant à l'extérieur des lames de séparation 205, les gaz à refroidir (G) en surpression ayant alors tendance à s'engouffrer dans des lames de séparation 205, via les ouvertures de diffusion 206, et à être entraînés avec les gaz EGR (H) dans les lames de séparation 205 du module de mélange 200.

Ainsi, au fur et à mesure que les gaz EGR (H) se déplacent dans les lames de séparation 205, des gaz à refroidir (G) s'ajoutent aux gaz EGR (H).

Comme décrit précédemment, les gaz EGR (H) se déplacent dans la longueur des lames de séparation 205 du module de mélange 200 de leur extrémité gauche à leur extrémité droite.

Au fur et à mesure que les gaz EGR (H) se déplacent dans les lames de séparation 205, les gaz EGR (H) sont dilués avec les gaz d'admission refroidis (G) ce qui diminue leur concentration, les gaz EGR (H) étant alors moins concentrés dans la partie droite des lames de séparation 205 que dans leur partie gauche. Autrement dit, la répartition des gaz EGR (H) en aval de l'échangeur de chaleur 100 n'est pas homogène, les gaz EGR étant plus concentrés dans la partie gauche des lames de séparation 205 à proximité de la tubulure d'introduction 201 que dans la partie droite des lames de séparation 205 à proximité du côté droit du cadre de support 250.

Afin d'éliminer cet inconvénient, en référence à la figure 7, pour une lame de séparation 205, plus les ouvertures de diffusion 206 sont éloignées de la tubulure d'introduction des gaz EGR 201, plus les ouvertures de diffusion 206 sont grandes. Autrement dit, les ouvertures de diffusion 206 sont plus grandes sur la partie droite des lames de séparation 205 que sur la partie gauche. Autrement dit encore, plus la concentration des gaz EGR (H) dans le flux de gaz circulant dans une zone d'une lame de séparation 205 est faible, plus la dimension de l'ouverture de diffusion 206 dans ladite zone de la lame de séparation 205 est importante.

Ainsi, la dimension des ouvertures de diffusion 206 est agencée pour assurer un débit constant en gaz EGR (H) le long de chaque lame de séparation 205 et ce, pour chacune des ouvertures de diffusion 206. Le débit correspond, au sens mathématique, au produit de la concentration des gaz EGR (H) dans le flux de gaz circulant dans une zone d'une lame de distribution 205 par la dimension de l'ouverture de diffusion 206 ménagée dans ladite zone de la lame de distribution 205.

En raison de la configuration des ouvertures de diffusion 206 le long de chaque lame de séparation 205, les gaz EGR (H) sont mélangés de manière homogène avec le flux de gaz à refroidir (G) malgré la présence d'ondes acoustiques entraînant des variations de pression dans l'échangeur de chaleur 100.

On répartit les séparateurs 210 sur la longueur du module de mélange 200 de manière à ce que le nombre d'ouvertures 206 compris entre deux séparateurs successifs 210 soit constant. Ainsi, comme les dimensions des ouvertures de diffusion 206 ne sont pas constantes le long d'une lame de séparation 205, la distance entre deux séparateurs successifs 210 n'est pas constante.

En référence à la figure 8, représentant un module de mélange selon une troisième forme de réalisation des ouvertures de diffusion, les ouvertures de diffusion 206 des lames de séparation 205 sont traversantes et ménagées orthogonalement à la direction dans laquelle s'étendent les lames de séparation 205 et orthogonalement au flux de gaz refroidi (G).

Une telle configuration des ouvertures de diffusion 206 permet de faciliter l'aspiration des gaz EGR (H) par effet Venturi hors des lames de séparation 205. En effet, si l'on considère une lame de séparation 205 d'un module de mélange 200 (strate de diffusion) lors de son fonctionnement, elle est comprise entre deux flux élémentaires de gaz à refroidir (G) (strate de conduction) (voir les flux élémentaires g5, g6 et g7 de la figure 8). La circulation de flux élémentaires de gaz à refroidir (G) de part et d'autre des ouvertures de diffusion 206 entraîne une aspiration des gaz EGR (H) (h5, h6) circulant dans les lames de séparation 205 hors du module de mélange 200 par effet Venturi.

Il est représenté sur la figure 8 des ouvertures de diffusion 206 de forme oblongue. Cependant, il va de soi que d'autres formes d'ouvertures pourraient également convenir pour favoriser l'aspiration par effet Venturi.

Un tel module de mélange 200 peut être simplement associé à un échangeur de chaleur 100, sans requérir de modifications structurales importantes de l'échangeur de chaleur 100. En effet, seul le collecteur de sortie 103 doit être modifié afin de ménager un passage d'accès à l'orifice de la tubulure d'introduction des gaz EGR 201 du module de mélange 200.

En outre, en comparaison avec un échangeur de chaleur selon l'art antérieur sur lequel est montée en aval une rampe d'admission de gaz EGR, l'échangeur de chaleur selon l'invention est plus court en raison du module de mélange qui est intégré au collecteur de sortie. Cela permet ainsi de monter l'échangeur de chaleur au plus près du moteur limitant ainsi l'encombrement sous le capot du véhicule.

De plus, un module de mélange selon l'invention n'est pas dépendant de la technologie utilisée pour réaliser le faisceau d'échange de chaleur 102. En effet, le module de mélange 200 peut s'adapter aussi bien à un échangeur de chaleur à plaques qu'à un échangeur de chaleur à tubes.

Un échangeur de chaleur à plaques est particulièrement adapté car il permet de diviser le flux principal d'air d'admission (G) selon des conduites de fluide parallèles préalablement à la circulation dudit flux principal d'air d'admission (G) dans le module de mélange 200.

En particulier, pour un échangeur de chaleur à plaques pour lequel un module de mélange est directement monté en aval, les lames de séparation du module de mélange sont alignées axialement avec les éléments d'échange du faisceau d'échange de chaleur, les canaux de conduite de fluide étant alors confondus avec les flux élémentaires de gaz d'admission (strate de conduction). Cela présente l'avantage de diminuer les pertes de charge dans l'échangeur de chaleur lors de la circulation des gaz d'admission. Dans une forme de réalisation préférée, le nombre de lames de séparation est égal au nombre de éléments d'échange de refroidissement de l'échangeur de chaleur à plaques.

Dans une autre forme de réalisation non représentée, les lames de séparation sont en quinconces avec les éléments d'échange de refroidissement de l'échangeur de chaleur à plaques, cela permet, d'une part, de diviser encore plus finement les flux élémentaires de gaz d'admission et, d'autre part, de créer des turbulences favorisant l'homogénéisation du mélange.

### Deuxième forme de réalisation : Module de mélange intégré au faisceau d'échange

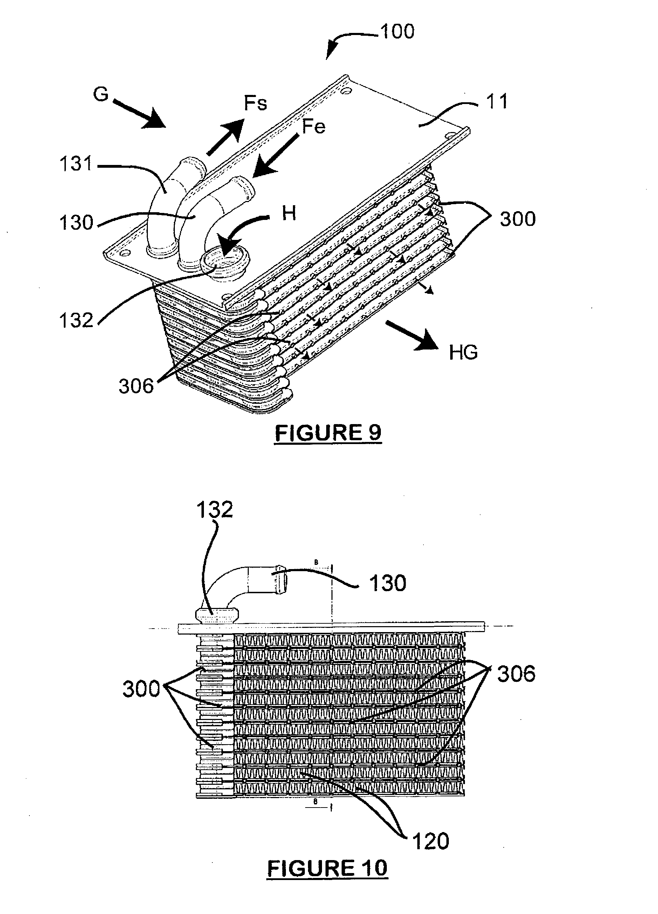

Dans une autre forme de réalisation de l'invention, représentée sur la figure 9, le module de mélange 200 est intégré à l'échangeur de chaleur dont la fonction principale est d'échanger de la chaleur avec un premier flux de gaz (G). Dans l'exemple suivant, les éléments d'échange de chaleur sont désignés éléments de refroidissement.

En référence à la figure 9, le fluide caloporteur de refroidissement (F), ici de l'eau glycolée, est introduit (Flèche Fe) dans l'échangeur 100 par une tubulure d'entrée 130 et ressort par une tubulure de sortie 131 (Flèche Fs), les tubulures 130, 131 étant rapportées sur la plaque supérieure 11 de l'échangeur de chaleur 100.

Une tubulure 132 d'amenée des gaz recirculés (H), est également rapportée sur la plaque supérieure 11 de l'échangeur de chaleur 100, les trois tubulures 130, 131, 132 étant alignées le long d'un petit côté du rectangle dont la plaque supérieure 11 a la forme comme représenté sur la figure 9. Il va de soi que les tubulures pourraient être ménagées à des extrémités opposées de la plaque supérieure ou inférieure de l'échangeur de chaleur.

Les tubulures 130, 131 sont en communication fluidique avec l'élément de refroidissement 300 disposé immédiatement sous la plaque supérieure 11, elle-même communiquant directement avec un autre élément de refroidissement 300 disposée sous elle. Ainsi, le fluide caloporteur (F) circule à travers tous les éléments de refroidissement 300 empilés de l'échangeur de chaleur 100 pour prélever des calories au flux de gaz à refroidir (G). Le fluide caloporteur (F) est divisé en flux élémentaires qui circulent respectivement dans les éléments de refroidissement 300 de l'échangeur 100. Après avoir échangé des calories avec le flux de gaz à refroidir (G), les flux élémentaires de fluide caloporteur sont regroupés pour sortir par la tubulure de sortie 131.

En ce qui concerne la tubulure d'amenée des gaz EGR 132, elle est reliée à l'élément de refroidissement 300 disposé immédiatement sous la plaque supérieure 11, ledit élément de refroidissement 300 communiquant directement avec l'élément de refroidissement disposé sous lui. Ainsi, le flux de gaz EGR (H) entrant par la tubulure EGR 132 est guidé dans chacun des éléments de refroidissement 300 de l'échangeur de chaleur 100. Le flux de gaz EGR (H) est divisé en flux élémentaires qui circulent respectivement dans les éléments de refroidissement 300 de l'échangeur 100.

En référence à la figure 9, le flux de gaz EGR (H) est acheminé vers chaque élément de refroidissement 300 de l'échangeur de chaleur 100. Il va de soi que le flux de gaz EGR (H) pourrait également ne circuler que dans certains éléments de refroidissement 300 de l'échangeur 100.

La tubulure d'amenée des gaz EGR 132 est ici rapportée sur la plaque supérieure 11 de l'échangeur de chaleur 100. Il va de soi que la tubulure d'amenée des gaz EGR 132 pourrait également être rapportée sur la plaque inférieure de l'échangeur de chaleur 100.

### - Élément d'échange de chaleur

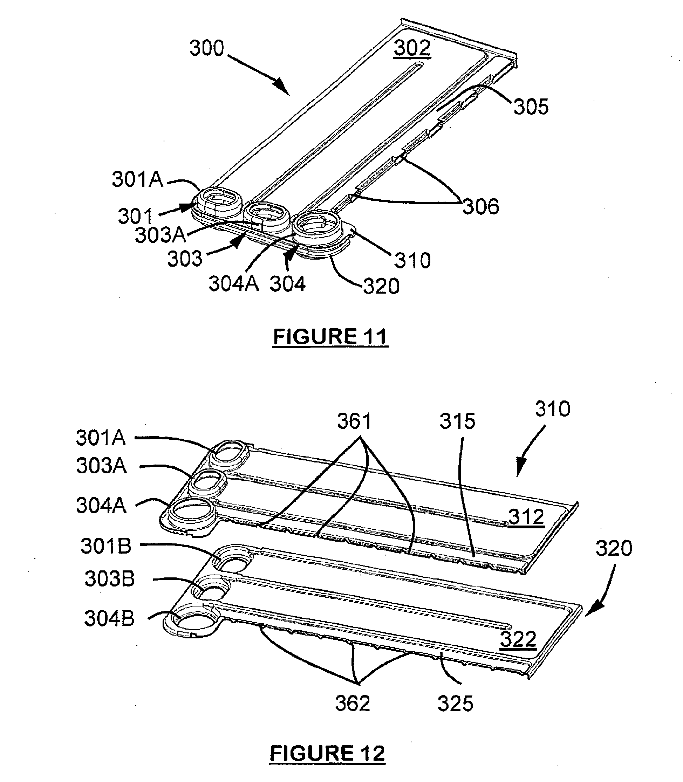

En référence à la figure 11, un élément d'échange de chaleur 300 de l'échangeur 100, ici un élément de refroidissement 300, présente une forme sensiblement rectangulaire avec des orifices traversants 301, 303, 304, ménagés le long d'un petit côté du rectangle dont l'élément d'échange de chaleur 300 a sensiblement la forme. L'élément d'échange de chaleur 300 est creux et est formé de deux plaques, appelées aussi coquilles 310, 320, la coquille supérieure 310 étant agencée pour se refermer sur la coquille inférieure 320 et former ainsi ledit élément d'échange de chaleur 300, les deux plaques 310, 320 étant en vis-à-vis.

Par « orifice traversant », on entend ici aussi bien un orifice traversant une coquille de l'élément d'échange de chaleur, qu'un orifice traversant l'élément d'échange en tant que tel. Les coquilles supérieure et inférieure comprennent respectivement des orifices traversant alignés selon un axe orthogonal audit élément d'échange.

En référence à la figure 11, l'élément d'échange de chaleur 300 comporte une partie en saillie aval, dans le prolongement du petit coté du rectangle dont l'élément d'échange de chaleur 300 a sensiblement la forme. L'orifice traversant d'amenée des gaz EGR 104, qui est circulaire, est formé en partie dans cette partie en saillie, les orifices traversants 301, 303 de l'élément d'échange de chaleur 300 ayant, pour leur part, une forme sensiblement oblongue. Les orifices traversants 301, 303, 304 sont alignés le long du petit côté du rectangle dont l'élément d'échange de chaleur a sensiblement la forme.

Par la suite, on désigne par face interne d'une coquille 310, 320 d'un élément d'échange de chaleur 300, la face de la coquille 310, 320 qui est destinée à être en contact avec la coquille complémentaire 310, 320 dudit élément d'échange de chaleur 300. On désigne par face externe, la face de la coquille 310, 320 qui est opposée à sa face interne. Ainsi, une fois l'élément d'échange de chaleur assemblé, seules les faces externes des coquilles 310, 320 demeurent visibles.

En référence à la figure 12, l'élément d'échange de chaleur 300 comporte des portions saillantes 301A, 303A, 304A, 301 B, 303B, 304B dirigées vers l'extérieur de l'élément d'échange de chaleur 300, ménagées circonférentiellement à chacun des orifices 301, 303, 304 traversant les coquilles 310, 320 de l'élément d'échange de chaleur 300. Autrement dit, la coquille supérieure 310 possède des portions saillantes 301A, 303A, 304A sur sa face externe qui sont dirigées vers l'extérieure dudit élément 300, ici vers la plaque supérieure de l'échangeur de chaleur 300. La coquille inférieure 320 possède des portions saillantes 301 B, 303B, 304B sur sa face externe qui sont dirigées vers l'extérieure dudit élément 300, ici vers la plaque inférieure de l'échangeur de chaleur 100.

Les orifices traversants 301, 303, 304 correspondent respectivement aux tubulures d'entrée du fluide caloporteur 130, de sortie du fluide caloporteur 131 et d'amenée des gaz EGR 132. Autrement dit, les orifices traversants 301, 303, 304 de l'élément d'échange de chaleur 300 sont respectivement en communication fluidique avec les tubulures d'entrée 130, de sortie 131 et d'amenée des gaz EGR 132.

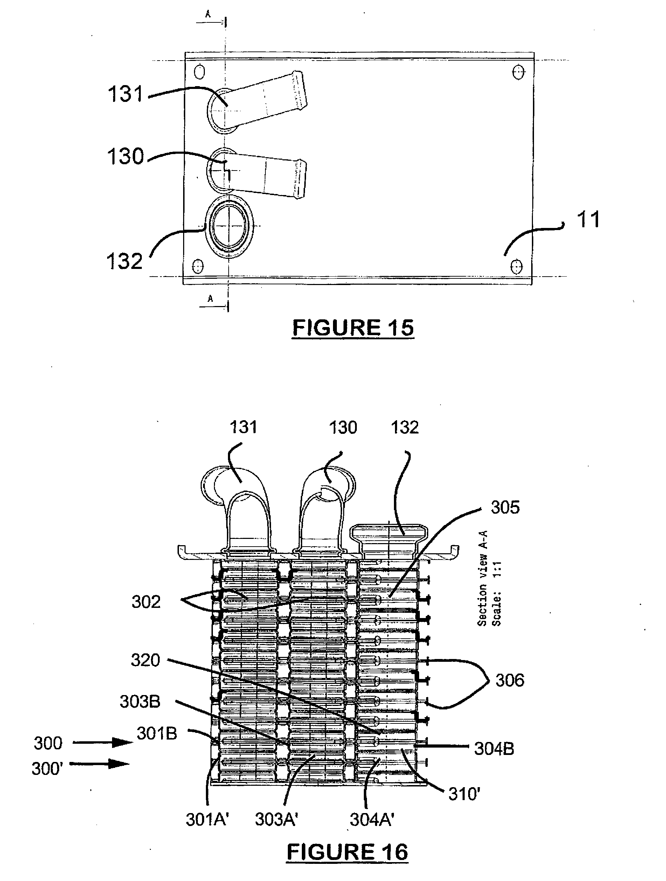

En référence à la figure 16, dans l'échangeur de chaleur 100, les portions saillantes supérieures 301A', 303A', 304A' de la coquille supérieure 310' d'un premier élément d'échange de chaleur 300' sont respectivement alignées et en contact avec les portions saillantes inférieures 301B, 303B, 304B de la coquille inférieure 320 d'un autre élément d'échange de chaleur 300 disposé directement au dessus du premier élément d'échange de chaleur 300'.

Si l'on considère l'élément d'échange de chaleur 300 de manière isolée, les orifices traversants 301, 303, 304 permettent respectivement l'admission de fluide caloporteur (F), son évacuation et l'introduction d'un flux de gaz EGR (H) dans l'élément d'échange de chaleur 300.

En référence à la figure 12, la coquille supérieure 310 de l'élément d'échange de chaleur 300 est agencée pour se refermer sur la coquille inférieure 320 et former un canal 302 de circulation du fluide caloporteur (F) et un canal 305 de distribution des gaz EGR (H), les canaux de circulation et de distribution 302, 305 étant représentés sur la figure 11.

Ainsi, par analogie avec le premier mode de réalisation, l'élément d'échange 300 intègre un canal 302 de circulation du fluide caloporteur, correspondant à l'élément d'échange du premier mode de réalisation « standalone », et un canal 305 de distribution des gaz EGR (H), correspondant à une lame de séparation du premier mode de réalisation « standalone », Cette forme de réalisation est avantageusement plus compacte en comparaison au premier mode de réalisation.

Comme on peut le voir sur les figures 12 et 16, les coquilles 310, 320 sont embouties de manière à former des demi-enveloppes pour chacun des canaux de circulation et de distribution 302, 305. Ainsi, comme on peut le voir sur la face externe de la coquille supérieure 310 de l'élément d'échange de chaleur 300, la coquille supérieure 310 comporte un embossage supérieur 312 sur sa partie amont correspondant avec un embossage inférieur 322 formé sur la partie amont de la coquille inférieure 320 pour former le canal de circulation de fluide caloporteur 302 lorsque les coquilles 310, 320 sont réunies et maintenues solidaires.

De même, la coquille supérieure 310 comporte un embossage supérieur 315 sur sa partie aval correspondant avec un embossage inférieur 325 formé sur la partie aval de la coquille inférieure 320 pour former le canal de distribution 305 lorsque les coquilles 310, 320 sont réunies et maintenues solidaires.

### Canal 302 de circulation du fluide caloporteur

En référence à la figure 11, le canal de circulation de fluide caloporteur 302, correspondant aux embossages supérieur et inférieur 312, 322, présente une forme en U dans l'élément d'échange de chaleur 300. La première branche du U s'étend dans la longueur de l'élément d'échange de chaleur 300, de l'orifice d'entrée du fluide caloporteur 301 jusqu'au côté dudit élément opposé audit orifice d'entrée 301, la base du U s'étendant dans la largeur de l'élément d'échange de chaleur 300 et la seconde branche du U, parallèle à la première, s'étendant dans la longueur de l'élément d'échange de chaleur 300 de la base du U jusqu'à l'orifice de sortie du fluide caloporteur 303, aligné avec l'orifice d'entrée de fluide caloporteur 304 le long du petit côté du rectangle dont l'élément d'échange de chaleur 300 a sensiblement la forme.

Le fluide caloporteur (F) est introduit dans l'élément d'échange de chaleur 300 par l'orifice d'entrée de fluide caloporteur 301 et circule dans le canal 302 de circulation de fluide caloporteur entre les faces internes des coquilles 310, 320 pour échanger des calories avec le flux de gaz chaud (G) balayant les faces externes des coquilles 310, 320 formant l'élément d'échange de chaleur 300, le fluide caloporteur (F) étant ensuite évacué de l'élément d'échange de chaleur 300 par l'orifice de sortie de fluide caloporteur 303.

Dans cet exemple, le canal 302 de circulation du fluide caloporteur (F) occupe 80% du volume de l'élément d'échange de chaleur 300.

### - Canal 305 de distribution des gaz EGR

Le canal de distribution 305 s'étend à partir de l'orifice 304 d'entrée de gaz EGR, dans la longueur de l'élément d'échange de chaleur 300, le canal de distribution 305 étant ménagé en aval du canal de circulation 302 à l'extrémité aval de l'élément d'échange de chaleur 300. Le canal de distribution 305, de dimension plus faible que le canal 302 de circulation du fluide caloporteur (F), comprend des ouvertures de diffusion de gaz EGR 306 réparties sur sa longueur.

Dans cet exemple, le canal de distribution des gaz EGR 305 s'étend dans toute la longueur de l'élément d'échange de chaleur 300. Il va de soi que le canal 305 pourrait ne s'étendre seulement que sur une partie de sa longueur.

### - Ouvertures de diffusion 306

En référence à la figure 11, dans une première forme de réalisation de l'élément d'échange de chaleur 300, le canal de distribution de gaz EGR 305 comporte six ouvertures 306 de forme oblongue ménagées sur la partie aval du canal de distribution 305. Dans cet exemple, les ouvertures de diffusion 306 s'étendent dans une direction parallèle à l'axe de circulation du flux de gaz à refroidir (G) dans l'échangeur de chaleur 100, sur la face aval de l'élément d'échange de chaleur 300.

L'élément d'échange de chaleur 300 est agencé pour refroidir le flux de gaz à refroidir (G) et diffuser, via les ouvertures de diffusion 306, le flux de gaz EGR (H) afin qu'il se mélange au flux de gaz à refroidir (G) sur une pluralité de zones élémentaires de mélange, discrètes et spatialement réparties, lesdites zones de mélange étant formées au niveau des ouvertures de diffusion 306 comme représenté par des petites flèches noires sur la figure 9.

Les ouvertures de diffusion 306 sont formées par des embossages de diffusion ménagés sur le bord aval de chacune des coquilles de l'élément d'échange, les embossages de diffusion étant répartis spatialement dans la longueur des coquilles. Ainsi, lorsque les coquilles sont assemblées pour former l'élément d'échange de chaleur 300, les embossages de diffusion de chacune des plaques entrent en correspondance pour former les ouvertures de diffusion 306 dans la partie aval du canal de distribution des gaz EGR 305, sur la face aval de l'élément d'échange de chaleur 300.

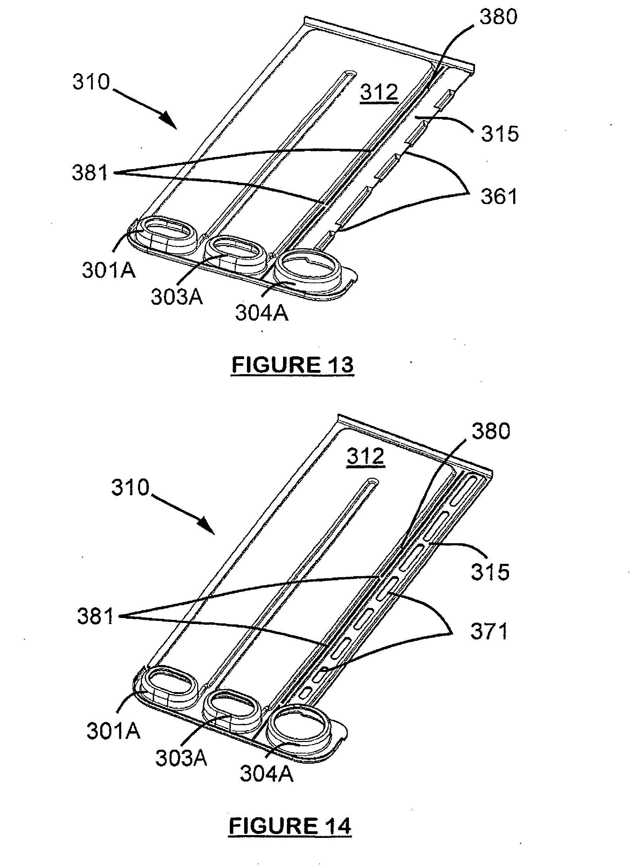

En référence à la figure 13, représentant un élément d'échange de chaleur 300 selon une deuxième forme de réalisation, chaque coquille 310, 320 comprend des embossages de diffusion 361, 362, une dizaine d'embossages de diffusion par coquille 310, 320 étant représentée sur la figure 13. Une fois les coquilles 310, 320 assemblées, les ouvertures de diffusion 306, ainsi formées, sont circulaires.

Il a été décrit et présenté des ouvertures de diffusion 306 oblongues et circulaires, mais il va de soi que d'autres formes d'ouvertures de diffusion 306 pourraient également convenir. En référence à la figure 13, les ouvertures de diffusion 361 possèdent une forme sensiblement rectangulaire.

Comme indiqué dans le premier mode de réalisation de l'invention (module de mélange indépendant), les ouvertures de diffusion 306 peuvent être formées et orientées diversement de manière à favoriser l'aspiration des gaz EGR ou la protection de l'échangeur contre la corrosion par les condensats. En particulier, en référence à la figure 14, des orifices de diffusion 371 sont ménagés dans l'épaisseur de l'élément d'échange.

En référence à la figure 13 représentant une coquille supérieure 310 de l'élément d'échange de chaleur 300 selon une troisième forme de réalisation de l'invention, le canal de distribution 305 (embossage supérieur 315) est séparé du canal 302 (embossage inférieur 312) de circulation du fluide caloporteur par des moyens 380 de rupture de pont thermique permettant d'isoler thermiquement le canal de circulation du fluide caloporteur 302, dans lequel circule un fluide à basse température (F), du canal de distribution de gaz EGR 305, dans lequel circule des gaz à haute température (H).

Toujours en référence à la figure 13, les moyens 380 de rupture de pont thermique se présentent sous la forme d'une ligne de rupture thermique formée de fentes longitudinales 380 ménagées, pour chacune des coquilles 310, 320 de l'élément d'échange de chaleur 300, entre les embossages 312, 315 ; 322, 326 correspondant respectivement aux deux canaux de circulation 302 et de distribution 305. Grâce aux fentes de rupture thermique 380, les canaux de circulation 302 et de distribution 305 ne sont maintenus l'un à l'autre, sur chaque coquille 310, 320, que par des tenons de maintien 381 qui assurent un maintien mécanique des canaux 302, 305 les uns par rapport aux autres mais limitent les transferts d'énergie thermique.

De tels moyens de rupture thermique 380 permettent de limiter, voire de supprimer, la condensation des gaz EGR (H) dans la conduite de distribution 305, protégeant ainsi de manière efficace l'élément d'échange de chaleur 300 contre la corrosion des condensats.

Après avoir décrit la structure des moyens de l'invention, son fonctionnement et sa mise en oeuvre vont maintenant être abordés.

### Mise en oeuvre d'un échangeur de chaleur avec un module de mélange intégré

Lors du fonctionnement de l'échangeur à plaques 100 comprenant un faisceau d'échange de chaleur avec un module de mélange intégré, un flux de gaz d'admission (G), destiné à être consommé dans un moteur thermique à combustion, circule d'amont en aval dans l'échangeur de chaleur 100 dans des canaux de conduite d'un flux de gaz à refroidir formés entre les éléments de refroidissement 300 de l'échangeur de chaleur 100.

Un fluide caloporteur (F) circule dans les canaux de circulation de fluide caloporteur 302 de chacun des éléments de refroidissement 300 de l'échangeur de chaleur 300 et échangent des calories avec le flux de gaz d'admission (G) circulant dans les canaux de conduite de fluide (strates de conduction). Un flux de gaz EGR (H) est introduit dans les canaux de distribution de gaz EGR 305 de chacun des éléments de refroidissement 300 de l'échangeur de chaleur 100. Le flux de gaz EGR (H) se diffuse hors des éléments 300 par des ouvertures de diffusion 306 ménagées dans les canaux de distribution de gaz EGR 305 (strates de diffusion).

Le flux de gaz EGR (H) est, dans cet exemple, refroidi avant d'être introduit dans les canaux de distribution des gaz EGR.

Les ouvertures de diffusion 306 sont spatialement réparties sur l'échangeur ce qui permet former des zones élémentaires de mélange discrètes, dans lesquelles le flux de gaz EGR (H) se mélange au flux de gaz d'admission refroidi (G), les strates de conduction et de diffusion étant alors alternées et enchevêtrées. En outre, les strates de conduction et de diffusion sont avantageusement divisés pour favoriser l'homogénéisation des gaz. Ici aussi, les ouvertures de diffusion 306 s'étendent selon un plan et sont distribuées selon au moins deux directions dans ledit plan. Dans ce mode de réalisation, les moyens diffusion de gaz 306 sont aussi réalisés sous la forme d'ouvertures ou fentes d'injection.

Il existe ainsi une pluralité de zones de mélange entre les deux gaz (représentées par des flèches noires sur la figure 9, chaque flux de gaz étant divisé pour former des zones de mélange locales, le flux de gaz d'admission (G) étant divisé selon les canaux de conduite et le flux de gaz EGR (H) étant réparti et diffusé selon les ouvertures de diffusion 306. Dans cet exemple, l'échangeur de chaleur 300 forme une pluralité de points d'injection de gaz EGR (H) dans le flux de gaz d'admission (G), ce qui permet avantageusement de former une pluralité de zones de mélange locales discrètes, garantissant une homogénéisation du mélange des deux gaz qui seront consommés en aval dans le moteur.

Il va de soi que le flux de gaz d'admission (G) peut également être réchauffé par des éléments de chauffage 300 conduisant un fluide à haute température transmettant des calories aux gaz d'admission. Ce mode d'utilisation est particulièrement avantageux lorsque le véhicule automobile, sur lequel est monté l'échangeur de chaleur, circule dans pays nordique dans lequel l'air d'admission est très froid.

Dans l'exemple précédent, tous les éléments d'échange participent au mélange des gaz EGR, la surface de mélange étant donc sensiblement égale à celle d'échange. Il va de soi que seuls certains éléments d'échange pourraient participer au mélange, les dimensions de la surface de mélange du faisceau d'échange de chaleur seraient alors inférieures à celles de la surface d'échange.

## Revendications

1. Module (200) de mélange de flux de deux gaz (G, H) pour un échangeur de chaleur (100) de moteur thermique à combustion interne, l'échangeur de chaleur (100) étant destiné à échanger de la chaleur avec un premier flux de gaz (G), le module (200) comprenant :
- une pluralité de premières strates de conduction du premier flux de gaz (G) et
- une pluralité de deuxièmes strates de diffusion d'un deuxième flux de gaz (H) le module (200) comprenant :
- des moyens (205) de division du premier flux de gaz (G) en une pluralité de flux élémentaires de premier gaz (g1, g2, ..., gn) ;
- des moyens d'introduction du deuxième flux de gaz (H) dans ledit module de mélange (200) et
- des moyens (206) de division du deuxième flux de gaz (H) hors du module de mélange (200) en une pluralité de flux élémentaires de deuxième gaz (h1, h2, ..., hn), les flux élémentaires de premier gaz (G, H, ..., gn) se mélangeant avec les flux élémentaires de deuxième gaz (h1, h2, ..., hn),
les moyens (205) de division du premier flux de gaz (G) comprenantt une pluralité de lames de séparation (205) parallèles les unes avec les autres, lesdites lames de séparation (205) étant creuses et reliées par une de leur extrémité aux moyens (201) d'introduction du deuxième flux de gaz (H), ledit module étant **caractérisé en ce qu'**il comprend un cadre de support (250) sensiblement rectangulaire dans lequel sont supportés :
- les lames de séparation (205) et
- des séparateurs de maintien (210) agencés pour maintenir les lames de séparation (205) parallèles les unes aux autres, les séparateurs de maintien (210) étant orthogonaux aux lames de séparation (205)
- et, dans lequel les moyens d'introduction (201) se présentent sous la forme d'une canalisation tubulaire (201) formant un bord latéral du rectangle dont le cadre de support (250) à la forme.

2. Module selon la revendication 1, dans lequel chaque deuxième strate de diffusion du deuxième flux de gaz (H) est disposée entre deux premières strates de conduction du premier flux de gaz (G).

3. Module selon l'une des revendications précédentes, dans lequel les moyens (206) de division du deuxième flux de gaz (H) se présentent sous la forme d'ouvertures de diffusion (206) ménagées dans lesdites lames de séparation (205) et dans lequel les ouvertures de diffusion (206) sont circulaires, oblongues ou rectangulaires.

4. Module selon la revendication précédente, dans lequel les ouvertures de diffusion (206) sont ménagées dans une partie aval des lames de séparation (205) et dans lequel les ouvertures de diffusion (206) sont traversantes et ménagées orthogonalement à la direction dans laquelle s'étendent les lames de séparation (205).

5. Module selon la revendication précédente, dans lequel la forme desdites ouvertures de diffusion traversantes (206) est agencée pour favoriser une aspiration du deuxième flux de gaz (H) hors des lames de séparation (205) par effet Venturi et dans lequel les ouvertures de diffusion (206) sont de plus en plus grandes au fur et à mesure que l'on s'éloigne des moyens (201) d'introduction du deuxième flux de gaz (H).

6. Echangeur de chaleur (100) de moteur thermique à combustion interne comprenant :
- un faisceau d'échange de chaleur (102) agencé pour échanger de la chaleur avec le premier flux de gaz (G) par circulation d'un fluide caloporteur (F) ;
- un collecteur de sortie (103) agencé pour guider le premier flux de gaz (G) hors de l'échangeur de chaleur (100) ;
- un module de mélange selon l'une des revendications précédentes, agencé pour mélanger le premier flux de gaz (G) avec un deuxième flux de gaz (H), ledit module de mélange (200) étant monté dans le collecteur de sortie (103) en aval du faisceau d'échange de chaleur (102).

7. Echangeur de chaleur (100) selon la revendication précédente, dans lequel :
- le faisceau d'échange de chaleur (102) est agencé pour échanger de la chaleur avec le premier flux de gaz (G) selon une surface transversale d'échange,
- le module de mélange (200) est agencé pour mélanger le premier flux de gaz (G) et le deuxième flux de gaz (H) selon une surface transversale de mélange,
- les dimensions de la surface d'échange du faisceau d'échange de chaleur (102) étant égales aux dimensions de la surface transversale de mélange du module de mélange (200), respectivement.

8. Echangeur de chaleur (100) selon l'une des revendications 6 à 7, dans lequel le faisceau d'échange de chaleur (102) est formé d'éléments d'échange de chaleur dans lesquelles circule le fluide caloporteur (F), les lames de séparation (205) du module de mélange (200) étant alignées axialement avec les éléments d'échange de chaleur du faisceau d'échange (102).

9. Echangeur de chaleur (100) selon l'une des revendications 6 à 7, dans lequel le faisceau d'échange de chaleur (102) est formé d'éléments d'échange de chaleur dans lesquelles circule le fluide caloporteur (F), les lames de séparation (205) du module de mélange (200) étant en quinconce avec les éléments d'échange de chaleur du faisceau d'échange (102).

10. Faisceau d'échange d'un échangeur de chaleur (100) de moteur thermique à combustion interne, le faisceau d'échange de chaleur (102) étant agencé pour échanger de la chaleur avec le premier flux de gaz (G) par circulation d'un fluide caloporteur (F), faisceau dans lequel est intégré un module de mélange selon l'une des revendications 1 à 5, le faisceau d'échange de chaleur (102) comprenant une pluralité d'éléments d'échange de chaleur (300) dont au moins un élément d'échange de chaleur (300) comporte :
- un canal (302) de circulation du fluide caloporteur ;
- des moyens (304) d'introduction du deuxième flux de gaz (H) dans ledit élément d'échange de chaleur (300),
- des moyens (350) de répartition et de diffusion du deuxième flux de gaz (H) hors dudit élément, le deuxième flux de gaz (H) se mélangeant au premier flux de gaz (G), et
- un canal de transport du deuxième flux de gaz (H) reliant lesdits moyens d'introduction (304) auxdits moyens de répartition et de diffusion (350), et,
- dans lequel les canaux de circulation du fluide caloporteur (302) et de transport du deuxième flux de gaz (305) sont formés dans ledit élément d'échange de chaleur (300).

11. Faisceau selon la revendication précédente, dans lequel les canaux de circulation du fluide caloporteur (302) et de transport du deuxième flux de gaz (305) sont séparés par des moyens de rupture de conduction thermique, lesdits moyens de rupture de conduction thermique (380) se présentant sous la forme de fentes de rupture thermique (380) formées dans l'élément d'échange de chaleur (300) entre le canal de circulation du fluide caloporteur (302) et le canal de transport du deuxième flux de gaz (305).

12. Faisceau selon l'une des revendications 10 à 11, dans lequel lesdits moyens de répartition et de diffusion (350) du deuxième flux de gaz (H) hors de l'élément d'échange de chaleur (300) se présentent sous la forme d'ouvertures de diffusion (306) ménagées dans le canal de distribution du deuxième flux de gaz à diffuser (305), et dans lequel les ouvertures de diffusion (371) sont ménagées dans l'épaisseur de l'élément d'échange de chaleur (300), à travers ledit canal de transport du deuxième flux de gaz (305).

## Patentansprüche

1. Modul (200) zum Vermischen der Ströme zweier Gase (G, H) für einen Wärmetauscher (100) einer Brennkraftmaschine, wobei der Wärmetauscher (100) dazu bestimmt ist, einen Wärmeaustausch mit einem ersten Gasstrom (G) durchzuführen, wobei das Modul (200) Folgendes umfasst:
- mehrere erste Schichten zur Leitung des ersten Gasstroms (G) und
- mehrere zweite Schichten zur Verteilung eines zweiten Gasstroms (H)
wobei das Modul (200) Folgendes umfasst:
- Mittel (205) zur Teilung des ersten Gasstroms (G) in mehrere Einzelströme des ersten Gases (g1 g2...., gn);
- Mittel zum Einleiten des zweiten Gasstroms (H) in das Mischmodul (200) und
- Mittel (206) zur Teilung des zweiten Gasstroms (H) außerhalb des Mischmoduls (200) in mehrere Einzelströme des zweiten Gases (h1, h2, ..., hn), wobei die Einzelströme des ersten Gases (G, H, ..., gn) sich mit den Einzelströmen des zweiten Gases (h1, h2, ..., hn) vermischen,
wobei die Mittel (205) zur Teilung des ersten Gasstroms (G) mehrere parallel zueinander angeordnete Trennwände (205) umfassen, wobei die Trennwände (205) hohl sind und an einem ihrer Enden mit Mitteln (201) zur Einleitung des zweiten Gasstroms (H) verbunden sind, wobei das Modul **dadurch gekennzeichnet ist, dass** es einen Trägerrahmen (250) umfasst, der im Wesentlichen rechteckig ist und zur Abstützung der folgenden darin befindlichen Elemente dient:
- der Trennwände (205) und
- von Haltestegen (210), die derart angeordnet sind, dass sie die Trennwände (205) parallel zueinander halten, wobei die Haltestege (210) rechtwinklig zu den Trennwänden (205) sind
- und in welchem sich Einleitungsmittel (201) befinden, die in Form einer röhrenförmigen Leitung (201) vorliegen, welche einen seitlichen Rand des Rechtecks bildet, welches der Trägerrahmen (250) seiner Form nach beschreibt.

2. Modul nach Anspruch 1, wobei jede zweite Schicht zur Verteilung des zweiten Gasstroms (H) zwischen zwei ersten Schichten zur Leitung des ersten Gasstroms (G) angeordnet ist.

3. Modul nach einem der vorhergehenden Ansprüche, wobei die Mittel (206) zur Teilung des zweiten Gasstroms (H) in Form von Verteilungsöffnungen (206) vorliegen, welche in den Trennwänden (205) ausgespart sind, und wobei die Verteilungsöffnungen (206) kreisförmig, länglich oder rechteckig sind.

4. Modul nach dem vorhergehenden Anspruch, wobei die Verteilungsöffnungen (206) in einem stromabwärts gelegenen Abschnitt der Trennwände (205) ausgespart sind und wobei die Verteilungsöffnungen (206) durchgehend sind und rechtwinklig zur Richtung ausgebildet sind, in welcher sich die Trennwände (205) erstrecken.

5. Modul nach dem vorhergehenden Anspruch, wobei die Form der durchgehenden Verteilungsöffnungen (206) derart angeordnet ist, dass ein Ansaugen des zweiten Gasstroms (H) aus den Trennwänden heraus (205) durch den Venturi-Effekt begünstigt wird und wobei die Verteilungsöffnungen (206) mit zunehmender Entfernung von den Mitteln (201) zur Einleitung des zweiten Gasstroms (H) immer größer werden.

6. Wärmetauscher (100) einer Brennkraftmaschine, welcher Folgendes umfasst:
- ein Wärmeaustauschbündel (102), das derart angeordnet ist, dass durch das Umwälzen eines Wärmeträgerfluids (F) ein Wärmeaustausch mit dem ersten Gasstrom (G) erfolgt;
- einen ausgangsseitigen Sammler (103), der derart angeordnet ist, dass der erste Gasstrom (G) aus dem Wärmetauscher (100) abgeleitet wird;
- ein Mischmodul nach einem der vorhergehenden Ansprüche, welches derart angeordnet ist, dass der erste Gasstrom (G) mit einem zweiten Gasstrom (H) gemischt wird, wobei das Mischmodul (200) stromabwärts des Wärmeaustauschbündels (102) in dem ausgangsseitigen Sammler (103) angebracht ist.

7. Wärmetauscher (100) nach dem vorhergehenden Anspruch, wobei:
- das Wärmeaustauschbündel (102) derart angeordnet ist, dass entlang einer querliegenden Austauschfläche ein Wärmeaustausch mit dem ersten Gasstrom (G) erfolgt,
- das Mischmodul (200) derart angeordnet ist, dass der erste Gasstrom (G) und der zweite Gasstrom (H) entlang einer querliegenden Mischfläche vermischt werden,
- die Abmessungen der Austauschfläche des Wärmeaustauschbündels (102) jeweils den Abmessungen der querliegenden Mischfläche des Mischmoduls (200) entsprechen.

8. Wärmetauscher (100) nach einem der Ansprüche 6 bis 7, wobei das Wärmeaustauschbündel (102) aus Wärmeaustauschelementen gebildet ist, in denen das Wärmeträgerfluid (F) strömt, wobei die Trennwände (205) des Mischmoduls (200) axial auf die Wärmeaustauschelemente des Austauschbündels (102) ausgerichtet sind.

9. Wärmetauscher (100) nach einem der Ansprüche 6 bis 7, wobei das Wärmeaustauschbündel (102) aus Wärmeaustauschelementen gebildet ist, in denen das Wärmeträgerfluid (F) strömt, wobei die Trennwände (205) des Mischmoduls (200) gegenüber den Wärmeaustauschelementen des Austauschbündels (102) jeweils versetzt angeordnet sind.

10. Austauschbündel eines Wärmetauschers (100) einer Brennkraftmaschine, wobei das Wärmeaustauschbündel (102) derart angeordnet ist, dass durch das Umwälzen eines Wärmeträgerfluids (F) ein Wärmeaustausch mit dem ersten Gasstrom (G) erfolgt, wobei in das Bündel ein Mischmodul nach einem der Ansprüche 1 bis 5 eingebaut ist, wobei das Wärmeaustauschbündel (102) mehrere Wärmeaustauschelemente (300) umfasst, von denen mindestens ein Wärmeaustauschelement (300) Folgendes aufweist:
- einen Kanal (302) zum Umwälzen des Wärmeträgerfluids;
- Mittel (304) zum Einleiten des zweiten Gasstroms (H) in das Wärmeaustauschelement (300),
- Mittel (350) zur Aufgliederung und Verteilung des zweiten Gasstroms (H) aus dem Element heraus, wobei der zweite Gasstrom (H) sich mit dem ersten Gasstrom (G) vermischt, und
- einen Kanal zum Transport des zweiten Gasstroms (H), wobei dieser die Einleitungsmittel (304) mit den Mitteln zur Aufgliederung und Verteilung (350) verbindet, und
- wobei die Kanäle zum Umwälzen des Wärmeträgerfluids (302) und zum Transport des zweiten Gasstroms (305) innerhalb des Wärmeaustauschelements (300) gebildet sind.

11. Bündel nach dem vorhergehenden Anspruch, wobei die Kanäle zum Umwälzen des Wärmeträgerfluids (302) und zum Transport des zweiten Gasstroms (305) durch Mittel zur Unterbrechung der Wärmeleitung getrennt sind, wobei die Mittel zur Unterbrechung der Wärmeleitung (380) in Form von Wärmeunterbrechungsspalten (380) vorliegen, welche zwischen dem Kanal zum Umwälzen des Wärmeträgerfluids (302) und dem Kanal zum Transport des zweiten Gasstroms (305) in dem Wärmeaustauschelement (300) gebildet sind.

12. Bündel nach einem der Ansprüche 10 bis 11, wobei die Mittel zur Aufgliederung und Verteilung (350) des zweiten Gasstroms (H) aus dem Wärmeaustauschelement (300) heraus in Form von Verteilungsöffnungen (306) vorliegen, die in dem Kanal zur Verbreitung des zu verteilenden zweiten Gasstroms (305) ausgespart sind, und wobei die Verteilungsöffnungen (371) in der Wandstärke des Wärmeaustauschelements (300) ausgespart sind, durch den Kanal zum Transport des zweiten Gasstroms (305).

## Claims

1. Module (200) for mixing flows of two gases (G, H) for an internal combustion engine heat exchanger (100), the heat exchanger (100) being intended to exchange heat with a first flow of gas (G), the module (200) comprising:
- a plurality of first strata for conducting the first flow of gas (G) and
- a plurality of second strata for diffusing a second flow of gas (H),
the module (200) comprising:
- means (205) for dividing the first flow of gas (G) into a plurality of elementary flows of first gas (g1, g2, ..., gn);
- means of introducing the second flow of gas (H) into the said mixing module (200), and
- means (206) for dividing the second flow of gas (H) outside the mixing module (200) into a plurality of elementary flows of second gas (h1, h2, ..., hn), the elementary flows of first gas (G, H, ..., gn) mixing with the elementary flows of second gas (h1, h2, ..., hn), the means (205) for dividing the first flow of gas (G) comprising a plurality of mutually parallel separating leaves (205) the said separating leaves (205) being hollow and connected by one of their ends to the means (201) for introducing the second flow of gas (H), the said module being **characterized in that** it comprises a substantially rectangular support frame (250) in which the following are supported:
- the separating leaves (205), and
- retaining separators (210) arranged to keep the separating leaves (205) parallel to one another, the retaining separators (210) being orthogonal to the separating leaves (205)
- and in which the introducing means (201) take the form of a tubular duct (201) forming one lateral edge of the rectangle representing the shape of the support frame (250).

2. Module according to Claim 1, in which each second stratum for diffusing the second flow of gas (H) is positioned between two first strata for conducting the first flow of gas (G).

3. Module according to one of the preceding claims, in which the means (206) for dividing the second flow of gas (H) take the form of diffusion openings (206) formed in the said separating leaves (205), and in which the diffusion openings (206) are circular, oblong or rectangular.

4. Module according to the preceding claim, in which the diffusion openings (206) are formed in a downstream part of the separating leaves (205) and in which the diffusion openings (206) are through-openings formed orthogonally to the direction in which the separating leaves (205) extend.

5. Module according to the preceding claim, in which the shape of the said diffusion through-openings (206) is designed to encourage the second flow of gas (H) to be drawn out of the separating leaves (205) through a Venturi effect, and in which the diffusion openings (206) increase in size with increasing distance away from the means (201) for introducing the second flow of gas (H).

6. Internal combustion engine heat exchanger (100) comprising:
- a heat exchange core bundle (102) designed to exchange heat with the first flow of gas (G) through the circulation of a heat-transfer fluid (F);
- an outlet header (103) designed to guide the first flow of gas (G) out of the heat exchanger (100) ;
- a mixing module according to one of the preceding claims, designed to mix the first flow of gas (G) with a second flow of gas (H), the said mixing module (200) being mounted in the outlet header (103) downstream of the heat exchange core bundle (102).

7. Heat exchanger (100) according to the preceding claim, in which:
- the heat-exchange core bundle (102) is designed to exchange heat with the first flow of gas (G) over a transverse exchange surface,
- the mixing module (200) is designed to mix the first flow of gas (G) and the second flow of gas (H) over a transverse mixing surface,
- the dimensions of the exchange surface of the heat-exchange core bundle (102) being equal to the dimensions of the transverse mixing surface of the mixing module (200), respectively.

8. Heat exchanger (100) according to one of Claims 6 and 7, in which the heat-exchange core bundle (102) is formed of heat-exchange elements through which the heat-transfer fluid (F) circulates, the separating leaves (205) of the mixing module (200) being axially aligned with the heat-exchange elements of the exchange core bundle (102).

9. Heat exchanger (100) according to one of Claims 6 and 7, in which the heat-exchange core bundle (102) is formed of heat-exchange elements through which the heat-transfer fluid (F) circulates, the separating leaves (205) of the mixing module (200) being in a staggered configuration with the heat-exchange elements of the exchange core bundle (102).

10. Exchange core bundle of an internal combustion engine heat exchanger (100), the heat-exchange core bundle (102) being designed to exchange heat with the first flow of gas (G) by circulation of a heat-transfer fluid (F), a mixing module according to one of Claims 1 to 5 being incorporated into which core bundle, the heat exchange core bundle (102) comprising a plurality of heat exchange elements (300), at least one heat-exchange element (300) of which comprises:
- a passage (302) for the circulation of the heat-transfer fluid;
- means (304) for introducing the second flow of gas (H) into the said heat-exchange element (300),
- means (350) for distributing and diffusing the second flow of gas (H) outside of the said element, the second flow of gas (H) mixing with the first flow of gas (G), and
- a passage transporting the second flow of gas (H) connecting the said introducing means (304) to the said distributing and diffusing means (350), and
- in which the passages for the circulation of the heat-transfer fluid (302) and for transporting the second flow of gas (305) are formed in the said heat-exchange element (300).

11. Core bundle according to the preceding claim, in which the passages for the circulation of the heat-transfer fluid (302) and for transporting the second flow of gas (305) are separated by means forming a break in thermal conduction, said thermal-conduction break means (380) taking the form of thermal break slots (380) formed in the heat-exchange element (300) between the passage for the circulation of the heat-transfer fluid (302) and the passage for transporting the second flow of gas (305).

12. Core bundle according to one of Claims 10 and 11, in which the said means (350) for distributing and diffusing the second flow of gas (H) outside the heat exchange element (300) take the form of diffusion openings (306) formed in the passage for distributing the second flow of gas that is to be diffused (305), and in which the diffusion openings (371) are formed in the thickness of the heat-exchange element (300), across the said passage for transporting the second flow of gas (305).
